Europäisches Patentamt

European Patent Office

Office européen des brevets

(19)

(11) Publication number: 0 296 832
A2

# (12) EUROPEAN PATENT APPLICATION

(21) Application number: 88305697.0

(22) Date of filing: 22.06.88

(51) Int. Cl.⁴: H04M 3/36 , H04L 11/08

(30) Priority: 24.06.87 GB 8714759

(43) Date of publication of application:
28.12.88 Bulletin 88/52

(84) Designated Contracting States:
BE DE ES FR GR IT LU NL SE

(71) Applicant: GEC PLESSEY
TELECOMMUNICATIONS LIMITED
P.O. Box 53 Telephone Road
Coventry, CV3 1HJ(GB)

(72) Inventor: Moore, Steven James
30 Queens Road
Beeston Nottingham NG9 2GS(GB)

(74) Representative: Nicholson, Ronald et al
Intellectual Property Department The
Plessey Company plc 2-60 Vicarage Lane
Ilford Essex IG1 4AQ(GB)

(54) A call monitor arrangement.

(57) A call monitor arrangement for monitoring a permanent telecommunication call through a call route. The arrangement determines whether there is data flow in the call route such that when data flow is determined then the call route is confirmed to exist whilst if no data flow is determined then the arrangement attempts to re-establish the permanent telecommunication call.

FIG. I.

EP 0 296 832 A2

# A CALL MONITOR ARRANGEMENT

The present invention relates to a call monitor arrangement and more particularly but not exclusively to such a monitor used to monitor permanent telecommunication calls.

There is a requirement in various situations such as data communications between computers and "tie-line" facilities within a multi-site company etc. to provide a permanent call facility. In such a permanent call facility a particular switching route or routes are designated to connect specific users.

Previously, it has been common to provide specific hard writing dedicated to a particular permanent call link or route between users. This approach has been taken due to its simplicity in operation and installation, however it is costly and has only limited flexibility.

It is an aim of the present invention to provide a permanent telecommunication call system wherein existing exchange or switching equipment is used with call monitoring equipment according to the present invention to ensure an effective permanent telecommunications call link.

According to the present invention there is provided a call monitor arrangement for monitoring a telecommunication system call between at least two users in a respective call route comprising data flow determining means, call re-routing means, permanent call data storing means and control means wherein the data flow determining means is arranged to determine flow of data in a respective call route and store such determination in the permanent call data storing means, the control means being arranged to interrogate the storing means whereby it can be determined whether the respective call route is in operation and being further adapted to stimulate the call re-routing means to attempt to re-establish the call between the two users if it is determined that the respective call route is not in operation.

Preferably, the call monitor arrangement will include means for giving an alarm if several attempts of re-establishing a telecommunications call link between users are unsuccessful this can be over a specific time period.

The re-routing means can attempt to re-establish telecommunications call links according to a stored routing table such that a defective switch in the system can be avoided.

An embodiment of the present invention will now be described by way of example only with reference to the accompanying drawings in which:-

Figure 1, is a schematic diagram illustrating a switching system,

Figure 2, is a block diagram of a switching system including a call monitor in accordance with the present invention.

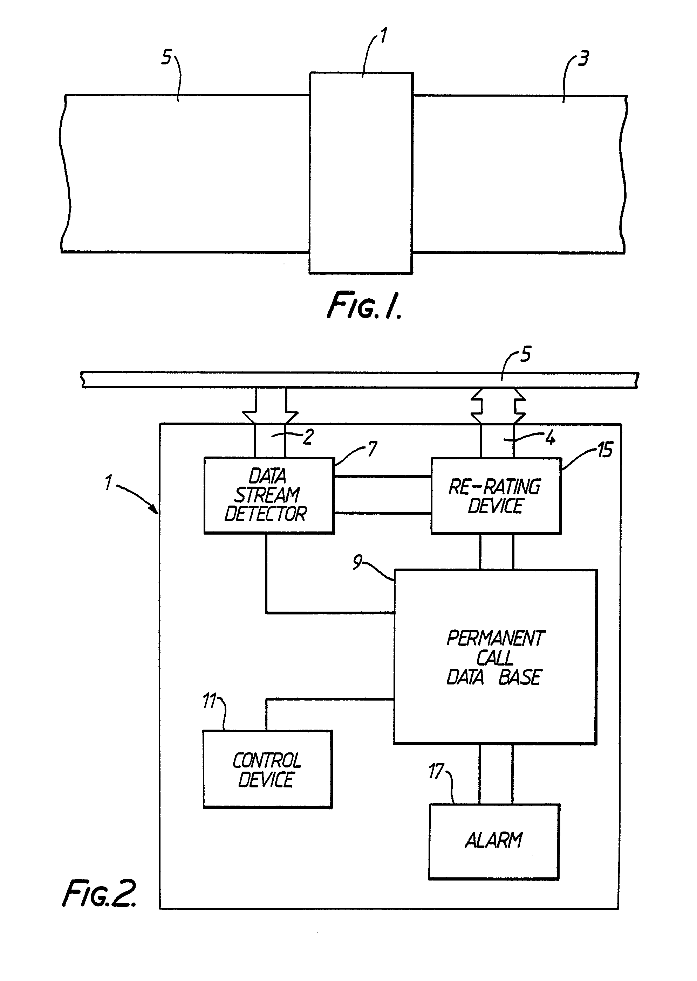

In Figure 1, a switching device 1 switches or connects input lines 3 and output lines 5 of a telecommunications system. A modern telecommunication switching system may include dynamic storage of input data from respective users and inter-change of this data in a so-called "cross-office" timeslot. The whole switching operation is governed by processor software. Usually there are surplus or unused timeslots within the operation of the switching system 1 during which enhancement features or processes such as conferencing etc can be facilitated and control/monitor operations of the telecommunication system performed. These enhancement processes improve the efficiency and quality of service provided by the telecommunications system.

The switching system 1 illustrated in Figure 1, includes a call monitor in accordance with the present invention. This call monitor is further illustrated in Figure 2. A data stream detector 7 is used to monitor all calls in progress between two connected users in a permanent call route 5 through an access port 2 in the route 5 and report via a permanent call store or database 9 to a control device 11 any faults or break-downs in data flow.

The control device 11 will then check the break-down in data flow in the permanent call route 5 and if the indication proves valid will clear the route. The permanent call store 9 stores, at distinct locations, a signal indicative of the state of each permanent call in progress in the telecommunication system as determined by the detector 11. Periodically, the data base 9 is interrogated by the control device 11 to establish whether a particular permanent calls exist. If a signal is found at a location then the associated permanent call is considered to exist or is being established. However, if no signal or a negative signal is found at a location then the associated permanent call is considered to have broken-down and so the permanent call must be re-established.

To re-establish a permanent call normally the previous route will be retried by the control device 11 stimulating a re-routing device 15 via the permanent call store 9 to reconnect the users whilst each disconnected user's data line waits. The re-routing device 15 operates through an access port 4 to access the respective users. If retrying of the previous call route is unsuccessful the monitor arrangement will try several other alternative routes, possibly several times, before giving up and activating an alarm signal 17. Both the number of attempts of alternative call routes and the time period over which they will be attempted may be adjusted to suit prescribed operating criteria by alteration of operating parameters in the control device 11.

It will be appreciated that the present invention gives a user the facility to set up or remove permanent call facilities without the expense of removing old fixed wiring call routes and installing new ones.

Possible uses of the permanent call monitor system of the present invention could be in:-

1. computer to computer links through a Digital Private Network Signalling System (DPNSS);

2. permanent voice intercom links between extensions.

3. permanent calls from a packet switching device to an external packet switch networks (e.g. PSS);

4. a "time of day basis" system where calls are sent at a particular time-of-day (e.g. bank transaction updates at the end of a working day or any other automatic computer installation data transfers); and,

5. testing of network configurations when configuration changes are made by the customer.

The methods of re-making broken permanent calls can include:-

(i) If the call is completely broken by user intervention e.g. disconnection, or switch failure, then attempts can be made to re-make the call and if persistent failure occurs then an alarm signal 17 will be produced. With a switch failure in a network switching system, stored routing tables are set up so that the failed switch will be bypassed; and

(ii) For permanent data calls in the DPNSS network, the call may be re-routed if the current call route fails and whilst an alternative exists. This mechanism is called "Secure Data" and operates by the data link or route ends detecting a route or link fault. When this occurs, the permanent call is not broken, but alternative DPNSS routes are used to re-establish or re-route the call. When a suitable link or route is found, the call is transferred to that link. If no suitable links are available the system will continue trying for a period of time before the call is declared broken down and the above method (i) is tried.

It will be appreciated that the above described embodiment is not the only application of the invention and alternatives may be constructed.

## Claims

1. A call monitor arrangement for monitoring a telecommunication system call between at least two users in a respective call route comprising data flow determining means, call re-routing means, permanent call data storing means and control means wherein the data flow determining means is arranged to determine flow of data in a respective call route and store such determination in the permanent call data storing means, the control means being arranged to interrogate the storing means whereby it can be determined whether the respective call route is in operation and being further adapted to stimulate the call re-routing means to attempt to re-establish the call between the two users if it is determined that the respective call route is not in operation.

2. A call monitor arrangement as claimed in claim 1 wherein the call re-routing means is arranged to attempt to re-establish the call using the respective call route.

3. A call monitor arrangement as claimed in claim 1 wherein the call re-routing means is arranged to attempt to re-establish the call between users by establishing an alternative call route.

4. A call monitor arrangement as claimed in claim 1, 2 or 3 wherein a plurality of call routes are stored in the call re-routing means whereby a call route that avoids a defective switch in the telecommunication system can be established.

5. A call monitor arrangement as claimed in any preceding claim wherein the call re-routing means is arranged to attempt to re-establish a call route between users a fixed number of times before stimulating an alarm signal.

6. A call monitor arrangement as claimed in any of claims 1, 2 or 3 wherein the call re-routing means is arranged to attempt to re-establish a call link between users for a fixed period of time before stimulating an alarm signal.

7. A call monitor arrangement substantially as hereinbefore described with reference to the accompanying drawings.

FIG. 1.

FIG. 2.